# EUROPEAN PATENT APPLICATION

(11) **EP 4 592 707 A1**
(43) Date of publication of application: **30.07.2025**
(21) Application number: 23868566.3
(22) Date of filing: 19.09.2023
(51) Int. Cl.: G01S 7/484, G01S 7/481, G01S 7/4911, H01S 5/183, G01J 1/44

(54) **LIDAR DEVICE, OPERATING METHOD, AND METHOD FOR GENERATING INFORMATION THEREOF**

(30) Priority: 21.09.2022 KR 20220119251; 21.09.2022 KR 20220119464
(71) Applicant: LG INNOTEK CO. LTD, Gangseo-gu Seoul 07796 (KR)
(72) Inventor: KO, Doo Won, Seoul 07796 (KR); JANG, Jung In, Seoul 07796 (KR); CHOI, Young Hwan, Seoul 07796 (KR)
(74) Representative: Plasseraud IP
(86) International application number: PCT/KR2023/014187
(87) International publication number: WO 2024/063514

(57) **Abstract**

A LiDAR device according to an embodiment of the present invention includes a light emitting unit that generates an output light signal and irradiates same to a target area, a light receiving unit that receives an input light signal that is input after being reflected from the target area, an information generating unit that generates information about the target area by using the input light signal input to the light receiving unit, and a control unit that controls the light emitting unit, the light receiving unit, and the information generating unit, wherein the light emitting unit has a field of view (FOV) fixed in advance in a first direction, and the control unit controls an FOV of the light emitting unit in a second direction perpendicular to the first direction.

## Description

### [Technical Field]

The present invention relates to a LiDAR device, an operating method, and an information generation method thereof.

### [Background Art]

A light detection and ranging (LiDAR) device measures a distance to a target object or shapes the target object using laser pulses that are emitted from the LiDAR device and then reflected back from the target object. The LiDAR device is applied to various technical fields that require three-dimensional images. For example, the LiDAR device can be applied to various technical fields such as meteorology, aviation, space, vehicles, and the like. Recently, the importance of the LiDAR device in the autonomous driving field has been rapidly increasing.

In general, a light emitting unit of the LiDAR device generates an output light signal and emits the output light signal to an object, a light receiving unit receives an input light signal reflected from the object, and an information generating unit generates information about the object using the input light signal received by the light receiving unit.

The light emitting unit of the LiDAR device includes a scanner, and the scanner scans an area of a preset field of view (FOV). Meanwhile, an area of a target area corresponding to the FOV increases in a direction away from the LiDAR device, and the larger the area of the target area, the longer it takes for the scanner to scan the target area and the more power is consumed.

In addition, a detection rate is decreased due to ambient light, a reflection angle between a light signal transmitted from the scanner and a reflector, and various reflectivity characteristics of the reflector, thereby making it difficult to acquire accurate information about a surrounding environment. In addition, there are problems that using a light source having an excessive intensity can be dangerous to visual safety and in the case of an object having a high reflectivity, the saturation phenomenon and the like due to the full-well phenomenon can occur beyond a dynamic range that is a signal receivable range of a photodetector. These problems can affect signal acquisition of surrounding pixels and acquisition of accurate distance information.

### [Disclosure]

### [Technical Problem]

The present invention is directed to providing a LiDAR device, of which a response speed is fast and power efficiency is good, and an information generation method thereof.

The present invention is also directed to providing a LiDAR device, of which a field of view (FOV) is adjusted adaptively according to an environment, and an information generation method thereof.

The present invention is also directed to providing a LiDAR device, of which signal detection capability is improved by increasing a signal-to-noise ratio, and an operating method.

The present invention is also directed to providing a LiDAR device, of which a signal-to-noise ratio may be maintained by measuring an intensity of surrounding light and adjusting a current value of an incident signal of a laser according to the measured intensity, and an operating method.

Objects of embodiments are not limited thereto and may also include objects or effects that may be identified from configurations or embodiments, which will be described below.

### [Technical Solution]

A LiDAR device according to an embodiment of the present invention includes a light emitting unit configured to generate an output light signal and emit the output light signal to a target area, a light receiving unit configured to receive an input light signal that is input after reflected from the target area, an information generating unit configured to generate information about the target area using the input light signal input to the light receiving unit, and a control unit configured to control the light emitting unit, the light receiving unit, and the information generating unit, wherein the light emitting unit has a preset field of view (FOV) in a first direction, and the control unit controls an FOV in a second direction perpendicular to the first direction of the light emitting unit.

The light emitting unit may have all preset FOVs in the second direction, and the control unit may control the light emitting unit to scan only some of all the FOVs in the second direction based on the information about the target area.

The control unit may extract an effective area from the target area based on the information about the target area and reduce the FOV in the second direction of the light emitting unit so that the light emitting unit scans the effective area.

The LiDAR device may further include a sensing unit including at least one of a gyro sensor and an acceleration sensor, wherein the control unit may control the FOV in the second direction of the light emitting unit according to a sensing result of the sensing unit.

The control unit may expand the reduced FOV in the second direction based on the information about the target area according to the sensing result of the sensing unit.

The light emitting unit may sequentially scan a plurality of lines, which extend in the first direction, in the second direction.

The first direction may be a horizontal direction, and the second direction may be a vertical direction.

The first direction may be a vertical direction, and the second direction may be a horizontal direction.

An information generation method of a LiDAR device according to an embodiment of the present invention includes generating, by a light emitting unit, an output light signal and emitting, by the light emitting unit, the output light signal to a target area, receiving, by a light receiving unit, an input light signal that is input after reflected from the target area, generating, by an information generating unit, information about the target area using the input light signal input to the light receiving unit, and controlling, by a control unit, a field of view (FOV) in a second direction perpendicular to a first direction of the light emitting unit which has a preset FOV in the first direction.

The controlling of the FOV in the second direction may include reducing the FOV in the second direction based on the information about the target area.

The controlling of the FOV in the second direction may further include expanding the reduced FOV in the second direction based on the information about the target area according to a sensing result of a sensing unit.

A LiDAR device according to another embodiment of the present invention includes a light emitting unit configured to generate an output light signal and emit the output light signal to a target area, a light receiving unit configured to receive an input light signal that is input after reflected from the target area, an information generating unit configured to generate information about the target area using the input light signal input to the light receiving unit, and a control unit configured to control the light emitting unit, the light receiving unit, and the information generating unit, wherein the light emitting unit includes a plurality of emitters disposed in an array form, and the control unit extracts an effective area from the target area based on the information about the target area and drives only some of the plurality of emitters so that the light emitting unit scans only the effective area.

The LiDAR device may further include a sensing unit including at least one of a gyro sensor and an acceleration sensor, wherein the control unit may control driving of the plurality of emitters according to a sensing result of the sensing unit.

A LiDAR device according to an embodiment of the present invention includes an output unit for outputting a light signal, a detection unit for detecting a first signal generated by the light signal reflected from an observation target and a second signal that is ambient light, a depth map generating unit for generating a depth map about the observation target based on the light signal and the first signal, and a control unit for comparing the intensity of the first signal with the intensity of the second signal and adjusting the intensity of the light signal.

The detection unit may detect a third signal that is noise.

The control unit may increase the intensity of the light signal when a ratio of the intensity of the first signal to the sum of the intensity of the second signal and the intensity of the third signal decreases.

The control unit may decrease a cycle of the light signal when the ratio decreases.

The control unit may decrease or maintain a time width of the first signal when the intensity of the first signal increases.

The control unit may decrease the time width of the first signal when the intensity of the first signal has a maximum value.

The control unit may control the intensity of the first signal and the time width of the first signal so that the product of the intensity of the first signal and the time width of the first signal is a predetermined value.

The control unit may compare a first difference value with a second difference value and adjust a cycle of the light signal, wherein the first difference value may be a difference value between the maximum value of the intensity of the first signal and an average value of the intensities of the first signal, the second signal, and the third signal in a first frame, the second difference value may be a difference value between the maximum value of the intensity of the first signal and the average value of the intensities of the first signal, the second signal, and the third signal in a second frame, and the second frame may be a frame measured after the first frame.

The control unit may reduce the cycle of the light signal in proportion to a difference between the first difference value and the second difference value when the second difference value is smaller than the first difference value.

The control unit may adjust the intensity of the light signal in response to a change in the second signal.

An operating method of a LiDAR device according to an embodiment of the present invention includes detecting, by a detection unit, a first signal generated by a light signal reflected from an observation target and a second signal that is ambient light, generating, by a depth map generating unit, a depth map about the observation target based on the light signal and the first signal, and comparing, by a control unit, an intensity of the first signal with an intensity of the second signal and adjusting an intensity of the light signal.

The detecting of the first signal and the second signal may include detecting a third signal that is noise by the detection unit.

The adjusting of the intensity of the light signal may include increasing, by the control unit, the intensity of the light signal when a ratio of the intensity of the first signal to the sum of the intensity of the second signal and the intensity of the third signal decreases.

The adjusting of the intensity of the light signal may include decreasing, by the control unit, a cycle of the light signal when the ratio decreases.

The adjusting of the intensity of the light signal may include decreasing or maintaining, by the control unit, a time width of the first signal when the intensity of the first signal increases.

The adjusting of the intensity of the light signal may include decreasing, by the control unit, the time width of the first signal when the intensity of the first signal has a maximum value.

The adjusting of the intensity of the light signal may include controlling, by the control unit, the intensity of the first signal and the time width of the first signal so that the product of the intensity of the first signal and the time width of the first signal is a predetermined value.

The adjusting of the intensity of the light signal may include comparing, by the control unit, a first difference value with a second difference value and adjusting a cycle of the light signal, wherein the first difference value may be a difference value between the maximum value of the intensity of the first signal and an average value of the intensities of the first signal, the second signal, and the third signal in a first frame, the second difference value may be a difference value between the maximum value of the intensity of the first signal and the average value of the intensities of the first signal, the second signal, and the third signal in a second frame, and the second frame may be a frame measured after the first frame.

The adjusting of the intensity of the light signal may include reducing, by the control unit, the cycle of the light signal in proportion to the difference between the first difference value and the second difference value when the second difference value is smaller than the first difference value.

The adjusting of the intensity of the light signal may include adjusting, by the control unit, the intensity of the light signal in response to a change in the second signal.

A LiDAR device according to an embodiment of the present invention includes a light output device (a vertical cavity surface emitting laser (VCSEL)) for outputting a light signal, a plurality of lens groups for collecting the light signal and outputting the collected light signal to the outside, a light detection device (a single photon avalanche diode (SPAD)) for detecting a first signal generated by the light signal reflected from an observation target and a second signal that is ambient light, a depth map generating unit for generating a depth map about the observation target based on the light signal and the first signal, a control unit for comparing an intensity of the first signal with an intensity of the second signal and adjusting an intensity of the light signal, and a memory for storing data on an intensity of the first signal, which is adjusted according to a change in the intensity of the second signal.

### [Advantageous Effects]

According to embodiments of the present invention, it is possible to obtain a LiDAR device, of which a response speed is fast and power efficiency is good, and an information generation method thereof.

According to the embodiments of the present invention, it is possible to obtain the LiDAR device, of which an FOV is adjusted adaptively according to an environment, and the information generation method thereof.

According to the embodiments of the present invention, it is possible to provide a time of flight (dToF) LiDAR of which a signal signal detection rate can be maintained even when surrounding light is detected.

According to the embodiments of the present invention, by measuring an intensity of surrounding light and adjusting an intensity of a laser according to the measure intensity, it is possible to improve a signal-to-noise ratio, thereby maintaining a signal detection rate.

Various and beneficial advantages and effects of the present invention are not limited to the above-described contents and will be more readily understood during a process of describing specific embodiments of the present invention.

### [Description of Drawings]

FIG. 1 is a block diagram of a LiDAR device according to one embodiment of the present invention.
FIG. 2 is a flowchart of an information generation method according to one embodiment of the present invention.
FIG. 3 is a flowchart of a method of controlling a field of view (FOV) of a light emitting unit according to one embodiment of the present invention.
FIGS. 4 and 5 show one example of a target area in which output light is emitted by the light emitting unit according to one embodiment of the present invention.
FIGS. 6 and 7 show another example of the target area in which the output light is emitted by the light emitting unit according to one embodiment of the present invention.
FIG. 8 is still another example of the target area in which the output light is emitted by the light emitting unit according to one embodiment of the present invention.
FIG. 9 is a block diagram of a LiDAR device according to another embodiment of the present invention.
FIG. 10 is a flowchart of an information generation method according to another embodiment of the present invention.
FIG. 11 is a flowchart of a method of controlling an FOV of a light emitting unit according to another embodiment of the present invention.
FIG. 12 is one example of a target area in which output light is emitted by the light emitting unit according to one embodiment of the present invention.
FIG. 13 is another example of the target area in which the output light is emitted by the light emitting unit according to one embodiment of the present invention.
FIG. 14 is a conceptual diagram of a light emitting unit included in a LiDAR device according to still another embodiment of the present invention.
FIG. 15 is an exploded view of a LiDAR device according to an embodiment of the present invention.
FIG. 16 is a configuration diagram of the LiDAR device according to the embodiment.
FIG. 17 is a schematic conceptual diagram of an operating method of the LiDAR device according to the embodiment.
FIG. 18 is a graph illustrating the intensities of first and second signals according to an embodiment.
FIG. 19 shows histograms illustrating a case in which the intensity of the second signal is increased according to an embodiment.
FIG. 20 is an image illustrating a change in signal when the intensity of a light signal is adjusted according to an embodiment.
FIG. 21 is an image illustrating a change in signal when the cycle of the light signal is adjusted according to an embodiment.
FIG. 22 is an image illustrating a change in signal when the width of the first signal is adjusted according to an embodiment.
FIG. 23 is an image illustrating a first difference value and a second difference value in a first frame and a second frame according to an embodiment.
FIG. 24 is a flowchart of an operating method of a LiDAR according to an embodiment.

### [Modes of the Invention]

Hereinafter, exemplary embodiments of the present invention will be described in detail with reference to the accompanying drawings.

However, the technical spirit of the present invention is not limited to some of the described embodiments, but may be implemented in various different forms, and one or more of the components among the embodiments may be used by being selectively coupled or substituted without departing from the scope of the technical spirit of the present invention.

In addition, terms (including technical and scientific terms) used in embodiments of the present invention may be construed as meaning that may be generally understood by those skilled in the art to which the present invention pertains unless explicitly specifically defined and described, and the meanings of the commonly used terms, such as terms defined in a dictionary, may be construed in consideration of contextual meanings of related technologies.

In addition, the terms used in the embodiments of the present invention are for describing the embodiments and are not intended to limit the present invention.

In the specification, a singular form may include a plural form unless otherwise specified in the phrase, and when described as "at least one (or one or more) of A, B, and C," one or more among all possible combinations of A, B, and C may be included.

In addition, terms such as first, second, A, B, (a), and (b) may be used to describe components of the embodiments of the present invention.

These terms are only for the purpose of distinguishing one component from another component, and the nature, sequence, order, or the like of the corresponding components is not limited by these terms.

In addition, when a certain component is described as being "connected," "coupled," or "joined" to another component, it may include a case in which the certain component is directly connected, coupled, or joined to another component, but also a case in which the certain component is "connected," "coupled," or "joined" to another component by still another component present between the certain component and another component.

In addition, when a certain component is described as being formed or disposed on "on (above)" or "below (under)" another component, the terms "on (above)" or "below (under)" may include not only a case in which two components are in direct contact with each other, but also a case in which one or more other components are formed or disposed between the two components. In addition, when described as "on (above) or below (under)," it may include the meaning of not only an upward direction but also a downward direction based on one component.

A LiDAR device according to an embodiment of the present invention may be a LiDAR device mounted on a vehicle to measure a distance between the vehicle and an object but is not limited thereto. The LiDAR device according to the embodiment of the present invention may extract a depth map using the time of flight (ToF) principle or the frequency modulation continuous wave (FMCW) principle. In the present specification, the LiDAR device may be referred to as an information generating device, a depth map generating device, or a camera device.

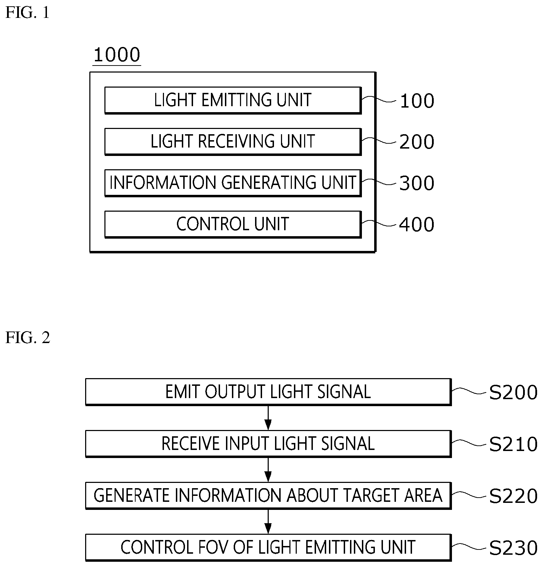

FIG. 1 is a block diagram of a LiDAR device according to one embodiment of the present invention.

Referring to FIG. 1, a LiDAR device 1000 according to an embodiment of the present invention includes a light emitting unit 100, a light receiving unit 200, an information generating unit 300, and a control unit 400.

The light emitting unit 100 may generate and output an output light signal in the form of a pulse wave or continuous wave. The continuous wave may be in the form of a sinusoid wave or squared wave. By generating the output light signal in the form of a pulse wave or continuous wave, the LiDAR device 1000 may detect a time difference or phase difference between the output light signal output from the light emitting unit 100 and an input light signal input to the light receiving unit 200 after reflected from a target area. In the present specification, output light may be light output from the light emitting unit 100 and incident on an object, and input light may be light output from the light emitting unit 100 to reach the target area and then reflected from the target area to be input to the light receiving unit 200. In the present specification, a pattern of the output light is referred to as an emitting pattern, and a pattern of the input light is referred to as a receiving pattern. From the perspective of the target area, the output light may be incident light, and the input light may be reflected light.

The light emitting unit 100 includes a light source and a lens group.

The light source generates and outputs a laser pulse. The light source may use light emitting diodes (LEDs) and have a form in which the plurality of light emitting diodes are arranged in a predetermined pattern. Alternatively, the light source may include organic light emitting diodes (OLEDs) or laser diodes (LDs). Alternatively, the light source may include vertical cavity surface emitting laser (VCSEL). The VCSEL is one of LDs for converting an electric signal into a light signal and may output light having a wavelength of about 800 to 1000 nm, for example, a wavelength of about 850 nm or 940 nm. The light source repeats turning-on/off at a predetermined time interval to generate an output light signal in the form of a pulse wave or a continuous wave. The predetermined time interval may be the frequency of the output light signal.

The lens group may condense light output from a light source and output the condensed light to the outside. The lens group may be disposed to be spaced apart from the light source above the light source. Here, "above" of "above the light source" may refer to a side to which light is output from the light source. The lens group may include at least one lens, and when the lens group includes a plurality of lenses, the lenses may be aligned based on a central axis to form an optical system. Here, the central axis may be the same as an optical axis of the optical system. The lens group may include a diffusion member that receives light output from the light source, then refracts or diffracts the received light, and outputs the refracted or diffracted light.

The light receiving unit 200 may receive a light signal reflected from the target area. In this case, the received light signal may be a light signal that is output by the light emitting unit 100 and reflected from the target area.

The light receiving unit 200 includes an image sensor, a filter disposed on the image sensor, and a lens group disposed on the filter.

The light signal reflected from the target area may pass through the lens group of the light receiving unit 200. The optical axis of the lens group of the light receiving unit 200 may be aligned with an optical axis of the image sensor. The filter may be disposed between the lens group of the light receiving unit 200 and the image sensor. The filter may be disposed on an optical path between the target area and the image sensor. The filter may filter light having a predetermined wavelength range. Light having a specific wavelength may pass the filter. For example, light in an infrared band may pass the filter, and the filter may block light other than light in the infrared band. The image sensor may receive a light signal and output the received light signal as an electrical signal. The image sensor may detect light having a wavelength corresponding to the wavelength of light output by the light emitting unit 100. For example, the image sensor may detect light in an infrared band.

The image sensor may be formed to have a structure in which a plurality of pixels are arranged in the form of a grid.

The light receiving unit 200 and the light emitting unit 100 may be disposed side by side. The light receiving unit 200 may be disposed beside the light emitting unit 100. The light receiving unit 200 may be disposed in the same direction as the light emitting unit 100.

The information generating unit 300 generates information about the target area using the input light signal input to the light receiving unit 200. The information about the target area may include three-dimensional information about the target area. For example, the information about the target area may include a depth map about the target area. For example, the information generating unit 300 may calculate a depth map of an object using a flight time required for the output light signal output from the light emitting unit 100 to be reflected from the object and then input to the light receiving unit 200. For example, the information generating unit 300 may calculate a time difference between the output light signal and the input light signal using the electric signal received by the image sensor and calculate the distance between the target area and the LiDAR device 1000 using the calculated time difference. For example, the information generating unit 300 may calculate a phase difference between the output light signal and the input light signal using the electric signal received from the image sensor and calculate the distance between the target area and the LiDAR device 1000 using the calculated phase difference.

The control unit 400 controls driving of the light emitting unit 100, the light receiving unit 200, and the information generating unit 300. The information generating unit 300 and the control unit 400 may be implemented in the form of a printed circuit board (PCB). In addition, the information generating unit 300 and the control unit 400 may be implemented in the form of a different configuration. Alternatively, the control unit 400 may be included in a terminal or a vehicle in which the LiDAR device 1000 according to the embodiment of the present invention is disposed. For example, the control unit 400 may be implemented in the form of an application processor (AP) of a smartphone provided with the LiDAR device 1000 according to the embodiment of the present invention or implemented in the form of an electronic control unit (ECU) of a vehicle provided with the LiDAR device 1000 according to the embodiment of the present invention.

The LiDAR device 1000 according to the embodiment of the present invention may be a solid state LiDAR. Unlike a mechanical LiDAR that rotates 360°, the solid state LiDAR does not include a mechanical component that rotates the LiDAR device 1000 and thus has advantages of being inexpensive and miniaturized. The solid state LiDAR may be, for example, one of a micro electro mechanical system (MEMS) LiDAR, a flash LiDAR, and an optical phase array (OPA) LiDAR. In the MEMS LiDAR, a tilt angle of a mirror may be slightly changed by an electric signal. In the flash LiDAR, an optical flash may be used, and a single large-area laser pulse may emit light on a forward environment. In the OPA, an optical phase modulator may control the speed of light passing through a lens and thus control an optical wavefront shape.

According to the embodiment of the present invention, the light emitting unit 100 may include a scanner in order to implement the solid state LiDAR. In the solid state LiDAR, the scanner may include a mirror or a diffusion member or may be implemented in the form of a chip.

Meanwhile, according to the embodiment of the present invention, the light emitting unit 100 of the LiDAR device 1000 emits the output light signal to the target area. Here, the target area may correspond to an area of a preset field of view (FOV) for the light emitting unit 100. The farther away from the LiDAR device 1000, the larger an area of the target area corresponding to the FOV, and the larger the area of the target area, the longer the time required for the light emitting unit 100 to scan the target area and the more power is consumed.

According to the embodiment of the present invention, an area to which an output light signal is emitted is adaptively adjusted. Hereinafter, an embodiment in which an area to which an output light signal is emitted is adaptively adjusted by controlling the FOV of the light emitting unit will be described.

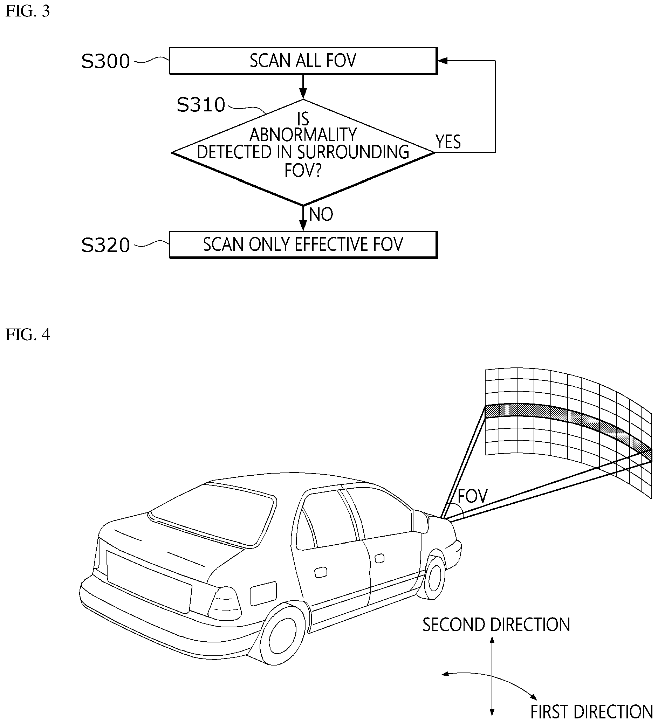

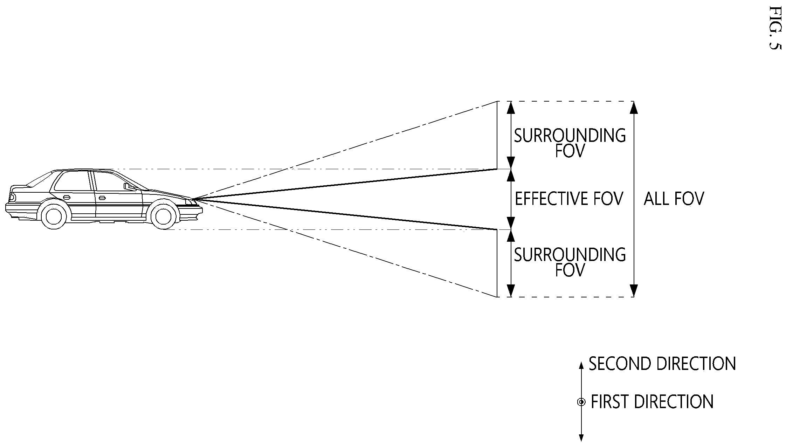

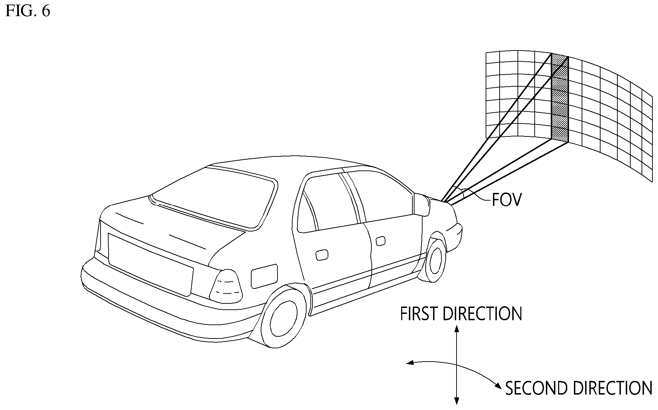

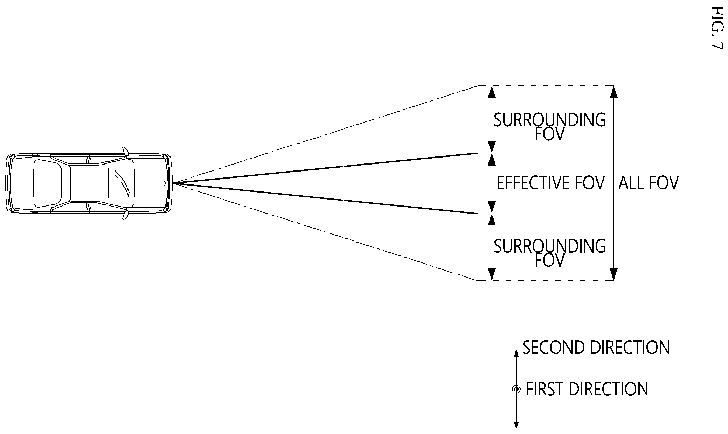

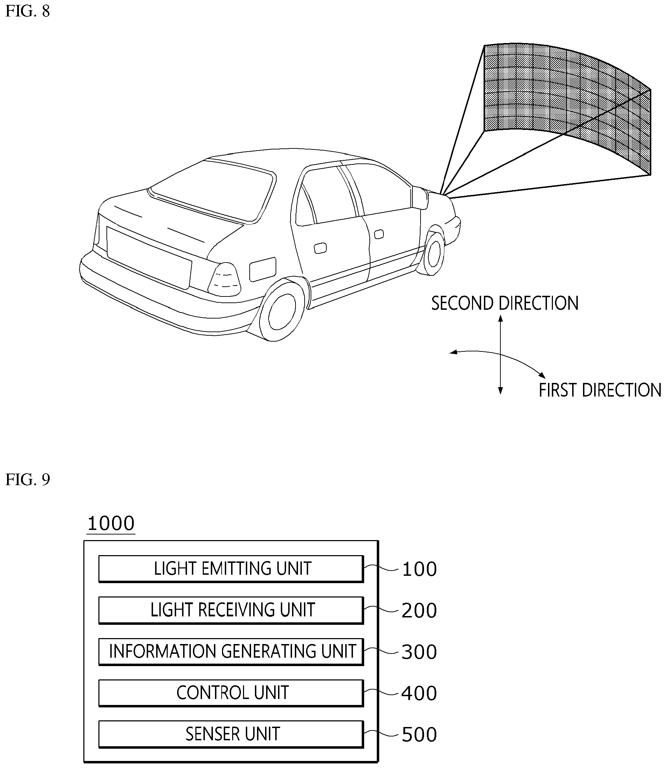

FIG. 2 is a flowchart of an information generation method according to one embodiment of the present invention, and FIG. 3 is a flowchart of a method of controlling an FOV of a light emitting unit according to one embodiment of the present invention. FIGS. 4 and 5 show one example of a target area in which output light is emitted by the light emitting unit according to one embodiment of the present invention, FIGS. 6 and 7 show another example of the target area in which the output light is emitted by the light emitting unit according to one embodiment of the present invention, and FIG. 8 is still another example of the target area in which the output light is emitted by the light emitting unit according to one embodiment of the present invention.

Referring to FIGS. 1 and 2, the light emitting unit 100 generates an output light signal and emits the output light signal to the target area (S200). In this case, the light emitting unit 100 may emit the output light signal to the target area of a preset FOV. The preset FOV may include an FOV in a first direction and an FOV in a second direction. In one embodiment, the FOV in the first direction may be an FOV in a horizontal direction, and the FOV in the second direction may be an FOV in a vertical direction. In another embodiment, the FOV in the first direction may be the FOV in the vertical direction, and the FOV in the second direction may be the FOV in the horizontal direction. Here, the FOV in the first direction and the FOV in the second direction are not limited to the FOV in the vertical direction and the FOV in the horizontal direction.

Next, the light receiving unit 200 receives the input light signal that is input after reflected from the target area (S210), and the information generating unit 300 generates information about the target area using the input light signal input to the light receiving unit 200 (S220). Regarding operations S200 to S220, overlapping descriptions of the same content as described with reference to FIG. 1 will be omitted.

According to the embodiment of the present invention, the control unit 400 controls the FOV of the light emitting unit 300 (S230). The light emitting unit 300 may have the preset FOV, and the control unit 400 may reduce or expand the preset FOV of the light emitting unit 100.

To describe operation S230 in detail, referring to FIG. 3, the light emitting unit 100 scans the preset FOV, that is, the all FOVs, of the light emitting unit 100 (S300). Here, all FOVs may include at least one of all FOVs in a first direction and all FOVs in a second direction.

As illustrated in FIG. 4, the light emitting unit 100 may have a preset FOV in a horizontal direction illustrated in a first direction. That is, the FOV in the horizontal direction among the preset FOVs of the light emitting unit 100 may be a fixed FOV. In addition, the light emitting unit 100 may sequentially scan a plurality of lines extending in the horizontal direction in a vertical direction illustrated in a second direction. In the present embodiment, the light emitting unit 100 may be implemented as a MEMS LiDAR. That is, the plurality of lines extending in the horizontal direction may be sequentially scanned in the vertical direction using the mirror of which an angle is finely adjusted according to a voltage applied to the light emitting unit 100.

As illustrated in FIG. 6, the light emitting unit 100 may have a preset FOV in the vertical direction illustrated in a first direction. That is, the FOV in the vertical direction among the preset FOVs of the light emitting unit 100 may be a fixed FOV. In addition, the light emitting unit 100 may sequentially scan a plurality of lines extending in the vertical direction in a horizontal direction illustrated in a second direction. In the present embodiment, the light emitting unit 100 may be implemented as a MEMS LiDAR. That is, the plurality of lines extending in the vertical direction may be sequentially scanned in the horizontal direction using the mirror of which an angle is finely adjusted according to the voltage applied to the light emitting unit 100.

As illustrated in FIG. 8, the light emitting unit 100 may be implemented as a flash LiDAR. That is, the light emitting unit 100 may emit an output light signal to the target area in a flash manner to include all preset FOVs in the vertical and horizontal directions.

Referring back to FIG. 3, next, the information generating unit 300 detects an abnormality in a surrounding FOV (S310). When an object to be detected is present in the surrounding FOV, it may be determined that an abnormality is present in the surrounding FOV. For example, when the LiDAR device 1000 according to the embodiment of the present invention is mounted on a vehicle, it may be determined that an abnormality is present in the surrounding FOV when another vehicle, a person, an animal, or other obstacle is detected in the surrounding FOV. The abnormality in the surrounding FOV may be detected based on information about the target area of the surrounding FOV. That is, operation S300 of scanning, by the light emitting unit 100, all FOVs and operation S310 of detecting, by the information generating unit 300, an abnormality of the surrounding FOV may be performed in operations S200 to S220 of FIG. 2.

As described above, the light emitting unit 100 has all preset FOVs in the horizontal direction and all preset FOVs in the vertical direction.

When the light emitting unit 100 has a preset FOV in the horizontal direction illustrated in the first direction as illustrated in FIG. 4, as illustrated in FIG. 5, all FOVs in the vertical direction illustrated in the second direction may include an effective FOV and a surrounding FOV. The effective FOV may be an area in which there is a relatively high possibility that an object to be detected is present, that is, an area including the center of the target area, and the surrounding FOV may be an area in which there is a relatively low possibility that the object to be detected is present, that is, an area disposed around the effective FOV. The effective FOV may be disposed between an upper surrounding FOV and a lower surrounding FOV. The effective FOV and the surrounding FOV may be preset or adaptively set by the control unit 300. For example, the control unit 300 may extract an effective area from all FOVs. Heights of the effective FOV, the upper surrounding FOV, and the lower surrounding FOV in the second direction are illustrated as similar to each other but are not limited thereto. The height of the effective FOV in the second direction may be 30% or more and 90% or less, preferably, 40% or more and 85% or less, and more preferably, 50% or more and 80% or less of all FOVs. Accordingly, it is possible to sufficiently secure the effective FOV and reduce the power consumption of the LiDAR device 1000.

When the light emitting unit 100 has a preset FOV in the vertical direction illustrated in the first direction as illustrated in FIG. 6, as illustrated in FIG. 7, the total horizontal FOV illustrated in the second direction may include an effective FOV and a surrounding FOV. The effective FOV may be an area in which there is a relatively high possibility that an object to be detected is present, that is, an area including the center of the target area, and the surrounding FOV may be an area in which there is a relatively low possibility that the object to be detected is present, that is, an area disposed around the effective FOV. The effective FOV may be disposed between a right surrounding FOV and a left surrounding FOV. The effective FOV and the surrounding FOV may be preset or adaptively set by the control unit 300. For example, the control unit 300 may extract an effective area from all the FOVs. Widths of the effective FOV, the right surrounding FOV, and the left surrounding FOV in the second direction are illustrated as similar to each other but are not limited thereto. The width of the effective FOV in the second direction may be 30% or more and 90% or less, preferably, 40% or more and 85% or less, and more preferably, 50% or more and 80% or less of all the FOVs. Accordingly, it is possible to sufficiently secure the effective FOV and reduce the power consumption of the LiDAR device 1000.

Next, in operation S310, when the information generating unit 300 detects an abnormality in the surrounding FOV, information about the target area for the surrounding FOV needs to be generated, and thus the control unit 400 controls the light emitting unit 100 to scan all the FOVs (S300).

In operation S310, when the information generating unit 300 does not detect an abnormality in the surrounding FOV, the control unit 400 controls the light emitting unit 100 to scan only the effective FOV (S320). That is, when the light emitting unit 100 has the preset FOV in the horizontal direction illustrated in the first direction as illustrated in FIG. 4, the control unit 400 may control the light emitting unit 100 to scan only the effective FOV of the total vertical FOV illustrated in the second direction as illustrated in FIG. 5. For example, the control unit 400 may extract the effective area from all vertical FOVs based on the information about the target area and reduce the vertical FOV of the light emitting unit 100 so that the light emitting unit 100 scans only the effective area. Alternatively, when the light emitting unit 100 has the preset FOV in the vertical direction illustrated in the first direction as illustrated in FIG. 6, the control unit 400 may control the light emitting unit 100 to scan only the effective FOV of the total horizontal FOV illustrated in the second direction as illustrated in FIG. 7. For example, the control unit 400 may extract the effective area from all vertical FOVs based on the information about the target area and reduce the horizontal FOV of the light emitting unit 100 so that the light emitting unit 100 scans only the effective area.

According to the embodiment of the present invention, the time and power consumed by the light emitting unit 100 to scan all FOVs can be reduced. Accordingly, the resolution of the information generating unit 300 can be increased.

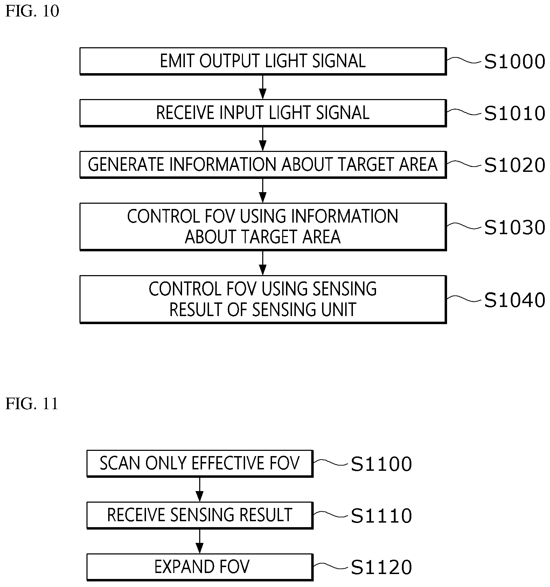

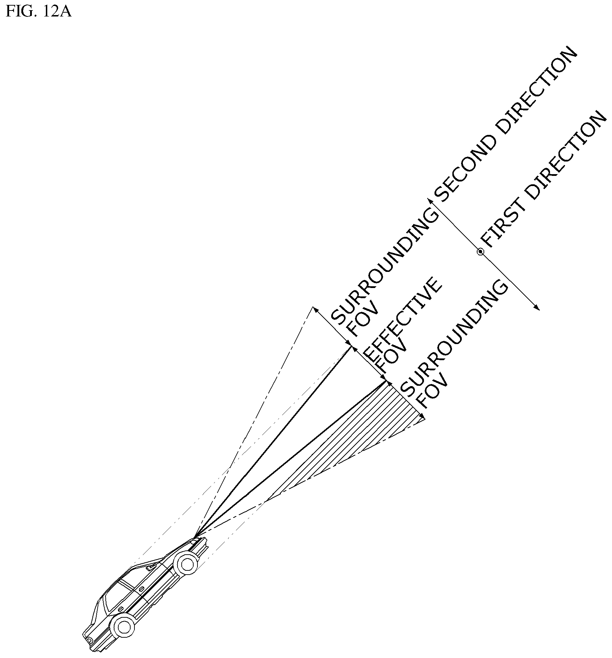

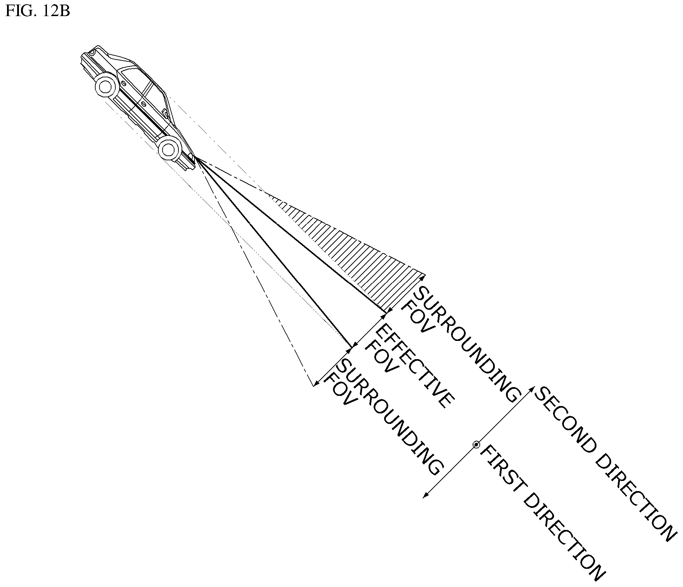

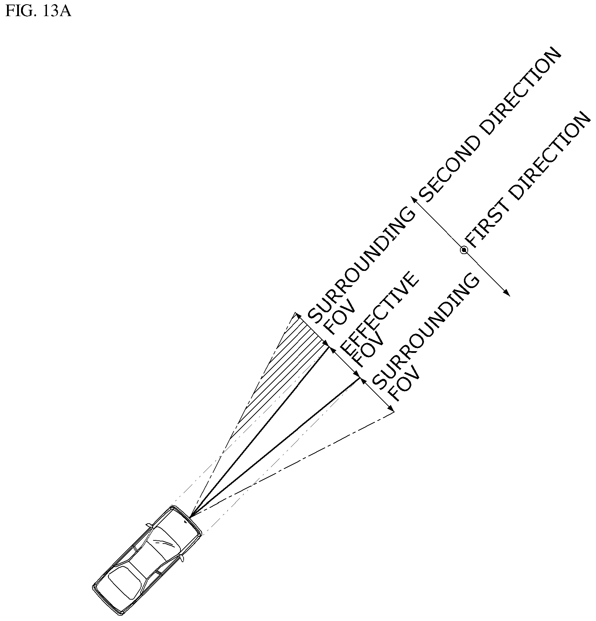

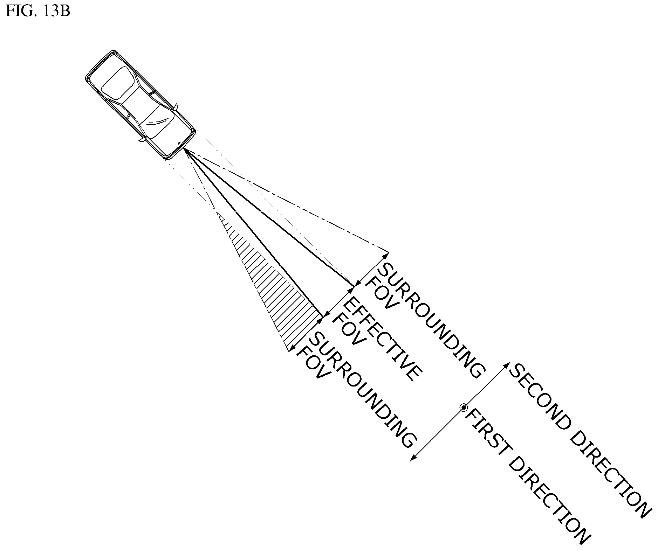

FIG. 9 is a block diagram of a LiDAR device according to another embodiment of the present invention, FIG. 10 is a flowchart of an information generation method according to another embodiment of the present invention, and FIG. 11 is a flowchart of a method of controlling an FOV of a light emitting unit according to another embodiment of the present invention. FIG. 12 is one example of a target area in which output light is emitted by the light emitting unit according to one embodiment of the present invention, and FIG. 13 is another example of the target area in which the output light is emitted by the light emitting unit according to one embodiment of the present invention.

Referring to FIG. 9, the LiDAR device 1000 according to another embodiment of the present invention includes the light emitting unit 100, the light receiving unit 200, the information generating unit 300, and the control unit 400. Overlapping descriptions of the same content as the above-described content regarding the light emitting unit 100, the light receiving unit 200, the information generating unit 300, and the control unit 400 will be omitted.

The LiDAR device 1000 according to another embodiment of the present invention further includes a sensor unit 500. The sensor unit 500 may include at least one of a gyro sensor and an acceleration sensor. The gyro sensor is a sensor for measuring an angular speed using three axes and may measure rotation therefrom. The sensor unit 500 may be included in the LiDAR device 1000 but is not limited thereto. The sensor unit 500 may be disposed outside the LiDAR device 1000, for example, inside a vehicle provided with the LiDAR device 1000, and a sensing result detected by the sensor unit 500 may be transmitted to the LiDAR device 1000.

Referring to FIGS. 9 and 10, the light emitting unit 100 generates an output light signal and emits the output light signal to the target area (S1000), the light receiving unit 200 receives an input light signal that is input after reflected from the target area (S1010), and the information generating unit 300 generates information about the target area using the input light signal input to the light receiving unit 200 (S1020). Regarding operations S1000 to S1020, overlapping descriptions of the same content as those described with reference to FIGS. 1 and 2 will be omitted.

Next, the control unit 400 controls the FOV of the light emitting unit 100 using the information about the target area generated in operation S1020 (S1030). Regarding operation S1030, the descriptions of operation S230 of FIG. 2 and FIGS. 3 to 8 may be applied in the same manner.

Next, according to the embodiment of the present invention, the control unit 400 further controls an FOV using the sensing result of the sensing unit 500 (S1040). To describe operation S1040 in detail, referring to FIG. 11, when the control unit 400 receives the sensing result of the sensing unit 500 (S1110) in a state in which the light emitting unit 100 scans only the effective FOV (S1100), the control unit 400 controls the light emitting unit 100 to expand the FOV according to the sensing result (S1120).

For example, referring to FIGS. 12A, 12B, 13A, and 13B, it is assumed that the control unit 400 may control the light emitting unit 100 to scan only the effective FOV.

As illustrated in FIG. 12A, when the sensor unit 500 detects that a vehicle provided with the LiDAR device 1000 is moving toward an uphill road, the control unit 400 may control the light emitting unit 100 to further scan the lower surrounding FOV. Conversely, as illustrated in FIG. 12B, when the sensor unit 500 detects that the vehicle provided with the LiDAR device 1000 is moving toward a downhill road, the control unit 400 may control the light emitting unit 100 to further scan the upper surrounding FOV.

As illustrated in FIG. 13A, when the sensor unit 500 detects that the vehicle provided with the LiDAR device 1000 is turning left, the control unit 400 may control the light emitting unit 100 to further scan the left surrounding FOV. Conversely, as illustrated in FIG. 13B, when the sensor unit 500 detects that the vehicle provided with the LiDAR device 1000 is turning right, the control unit 400 may control the light emitting unit 100 to further scan the right surrounding FOV.

In this way, when the control unit 400 controls the light emitting unit 100 according to the sensing result of the sensor unit 500, the FOV may be adaptively expanded according to a moving environment of the vehicle. Accordingly, since the light emitting unit 100 does not always need to scan all FOVs, it is possible to increase a response speed of the LiDAR device 1000, reduce power consumption, and expand the FOV in real time according to the environment.

Meanwhile, the embodiment in which the FOV of the light emitting unit is controlled to adaptively adjust the area to which the output light signal is emitted has been mainly described, but the embodiment of the present invention is not limited thereto. According to still another embodiment of the present invention, the driving of the light emitting unit 100 may be controlled to adaptively adjust the area to which the output light signal is emitted.

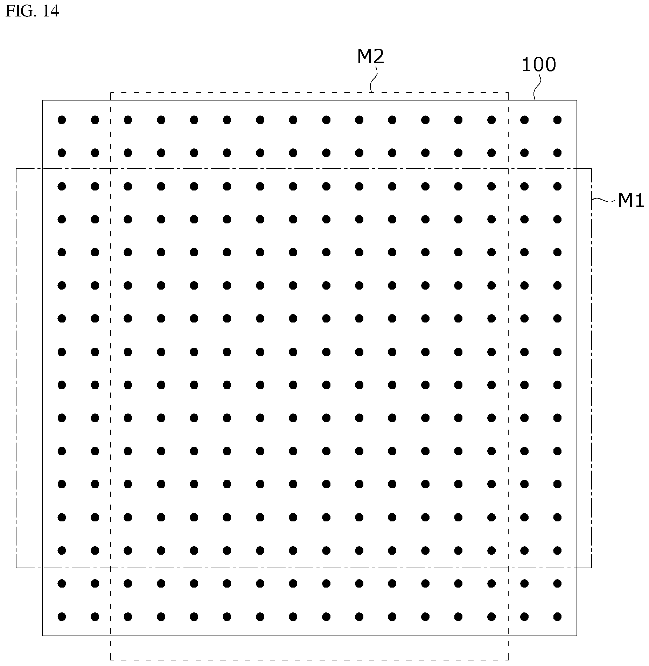

FIG. 14 is a conceptual diagram of a light emitting unit included in a LiDAR device according to still another embodiment of the present invention.

Referring to FIG. 14, the light source of the light emitting unit 100 includes a plurality of emitters disposed in an array form, the plurality of emitters are disposed in an m*n matrix, and the driving of the plurality of emitters is individually controlled. That is, the control unit 400 may control some of the plurality of emitters to be turned on and the rest to be turned off.

According to the embodiment of the present invention, the control unit 400 extracts the effective area from the target area based on the information about the target area and drives only some of the plurality of emitters so that the light emitting unit 100 scans only the effective area. For example, the control unit 400 may drive only emitters included in M1 or only emitters included in M2 among the plurality of emitters based on a position of the effective area. For example, when the light emitting unit 100 emits light having the effective FOV in the horizontal direction, the light emitting unit 100 may drive only the emitters included in M1 among the plurality of emitters, and when the light emitting unit 100 emits light having the effective FOV in the vertical direction, the light emitting unit 100 may drive only the emitters included in M2 among the plurality of emitters. Detailed descriptions of the generation of the information about the target area and the extraction of the effective area may refer to the contents described in FIGS. 1 to 13.

According to another embodiment of the present invention, the control unit 400 may further control the driving of the plurality of emitters according to the sensing result of the sensing unit 500. For example, in a state in which only the emitters included in M1 among the plurality of emitters are driven by the control unit 400, when it is necessary to expand the effective area as the sensing result of the sensing unit 500, the control unit 400 may control at least some of the emitters not included in M1 to be further driven. Detailed descriptions of the sensing result of the sensing unit 500 and the expansion of the effective area according to the sensing result may refer to the contents described in FIGS. 9 to 13.

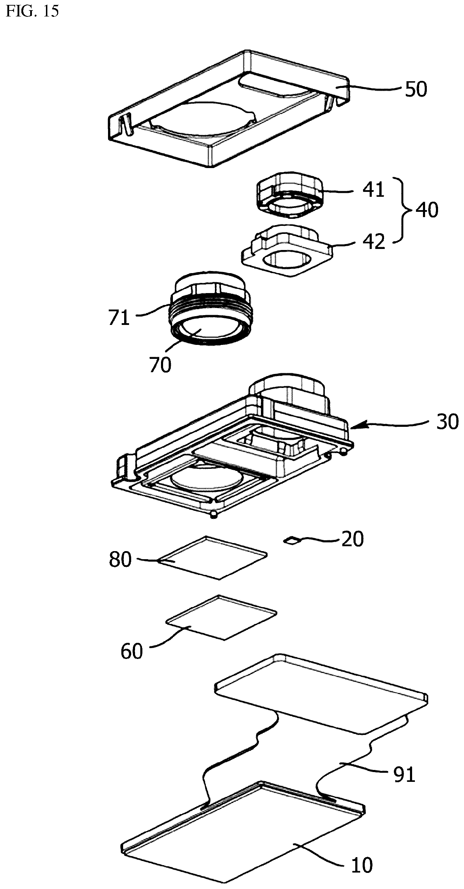

FIG. 15 is an exploded view of a LiDAR device according to an embodiment of the present invention.

The LiDAR device may include a light emitting unit and a light receiving unit. However, since components such as a substrate 10, a holder 30, a shield can 50, and the like are formed integrally and used in common for the light emitting unit and the light receiving unit, it may be difficult to distinguish the light emitting unit from the light receiving unit. In this case, each of the above components can be understood as a component of each of the light emitting unit and the light receiving unit. However, as a modified example, the common components of the substrate 10, the holder 30, and the shield can 50 may be provided separately to each of the light emitting unit and the light receiving unit.

The light emitting unit may include the substrate 10, the light source 20, the holder 30, a diffusion member 41, a diffuser ring 42, and the shield can 50. The light receiving unit may include the substrate 10, a sensor 60, a filter 80, the holder 30, a lens 70, a barrel 71, and the shield can 50.

The substrate 10 may include a printed circuit board (PCB). The substrate 10 may be connected to a connector through a flexible PCB (FPCB) 91. The substrate 10 and the FPCB 91 may be formed as a rigid FPCB (RFPCB). The light source 20 and the sensor 60 may be disposed on the substrate 10. The substrate 10 may be disposed under the holder 30. The substrate 10 may include a terminal. The terminal of the substrate 10 may be coupled to a coupling portion of the shield can 50. The terminal of the substrate 10 may include a plurality of terminals. The terminal of the substrate 10 may include two terminals.

The light source 20 may be disposed on the substrate 10. The light source 20 may be disposed in contact with the substrate 10. The light source 20 may be disposed above the substrate 10. The light source 20 may be disposed on the substrate 10. The light source 20 may correspond to the light source 110.

The holder 30 may be disposed on the substrate 10. The holder 30 may be disposed in contact with the substrate 10. The holder 30 may be disposed above the substrate 10. The holder 30 may be disposed on the substrate 10. The holder 30 may be fixed to the substrate 10 by an adhesive. The holder 30 may accommodate the light source 20, the diffuser module 40, the sensor 60, and the filter 80 therein. The holder 30 may be an injection-molded plastic product. The holder 30 may be formed by injection molding.

The diffuser module 40 may include a diffusion member 41 and a diffuser ring 42. The diffuser module 40 may be formed integrally as in the modified example, but in the present embodiment, the diffuser module 40 may be manufactured separately as the diffusion member 41 and the diffuser ring 42 to increase moldability during injection molding. The diffusion member 41 and the diffuser ring 42 may be separated.

The diffusion member 41 may be a diffuser lens. The diffusion member 41 may correspond to the diffusion member 120 and the diffusion member 400. The diffusion member 41 may be disposed in the holder 30. The diffusion member 41 may be coupled to the holder 30. The diffusion member 41 may be fixed to the holder 30. The diffusion member 41 may be disposed on an optical path of light emitted from the light source 20. The diffusion member 41 may be disposed on the light source 20. The diffusion member 41 may be disposed above the light source 20. The diffusion member 41 may be an injection-molded plastic product. The diffusion member 41 may be formed by plastic injection molding. A height of an upper end of the diffusion member 41 may correspond to a height of an upper end of the lens 70. The diffusion member 41 may be inserted upward in a vertical direction and coupled to the holder 30. In this case, "upward" may refer to a direction from a lower portion of the holder 30 to an upper portion of the holder 30. A part of the diffusion member 41 may overlap the holder 30 upward.

The diffuser ring 42 may be disposed in the holder 30. The diffusion ring 42 may be fixed to the holder 30. The diffusion ring 42 may be coupled to the holder 30. The diffuser ring 42 may be disposed under the diffusion member 41. The diffusion ring 42 may support the diffusion member 41. The diffusion ring 42 may be in contact with the diffusion member 41. The diffuser ring 42 may be an injection-molded plastic product. The diffuser ring 42 may be formed by plastic injection molding.

The shield can 50 may cover a body portion of the holder 30. The shield can 50 may include a cover. The shield can 50 may include a cover can. The shield can 50 may be a non-magnet. The shield can 50 may be formed of a metallic material. The shield can 50 may be formed of a metal plate. The shield can 50 may be electrically connected to the substrate 10. The shield can 50 may be connected to the substrate 10 through solder balls. Accordingly, the shield can 50 may be grounded. The shield can 50 may block electromagnetic interference (EMI). In this case, the shield can 500 may be referred to as an "EMI shield can." In the present embodiment, since a high voltage is used inside the optical device, EMI noise may increase, and the shield can 50 may block the EMI noise.

The sensor 60 may be disposed on the substrate 10. The sensor 60 may be disposed at the other side of a bulkhead of the holder 30 on the substrate 10. That is, the sensor 60 may be disposed at a side opposite to the light source 20 with respect to the bulkhead of the holder 30. The sensor 60 may detect infrared rays. The sensor 60 may detect light of a specific wavelength among the infrared rays. The sensor 60 may detect light passing through the filter 80. The sensor 60 may detect light in the wavelength band of the light source 20. Accordingly, the sensor 60 may detect light emitted from the light source 20 and reflected in a subject to detect three-dimensional image information of the subject. An effective sensing area of the sensor 60 may be disposed to correspond to the diffusion member 41, but the sensor 60 may be disposed to be biased entirely toward the bulkhead. A circuit pattern of the sensor 60 and the like may be disposed on a portion of the sensor 60, which is biased toward the bulkhead.

The lens 70 may be fixed in the barrel 71. The lens 70 may be an injection-molded plastic product. The lens 70 may be formed by plastic injection molding. The lens 70 may include a plurality of lenses.

The filter 80 may be disposed between the lens 70 and the sensor 60. The filter 80 may be a band pass filter through which light in a specific wavelength passes. The filter 80 may allow infrared rays to pass therethrough. The filter 80 may allow the light in the specific wavelength among the infrared rays to pass therethrough. The filter 80 may allow light in a wavelength band of light emitted by the light source 20 to pass therethrough. The filter 80 may block visible light. The filter 80 may be coupled to the holder 30. A groove having the size corresponding to the filter 80 may be formed in the holder 30, and the filter 80 may be inserted into the groove and fixed using an adhesive. An adhesive injection groove through which an adhesive is injected between the filter 80 and the holder 30 may also be formed in the groove of the holder 30. The filter 80 may be disposed at a position lower than a position of the diffuser ring 42.

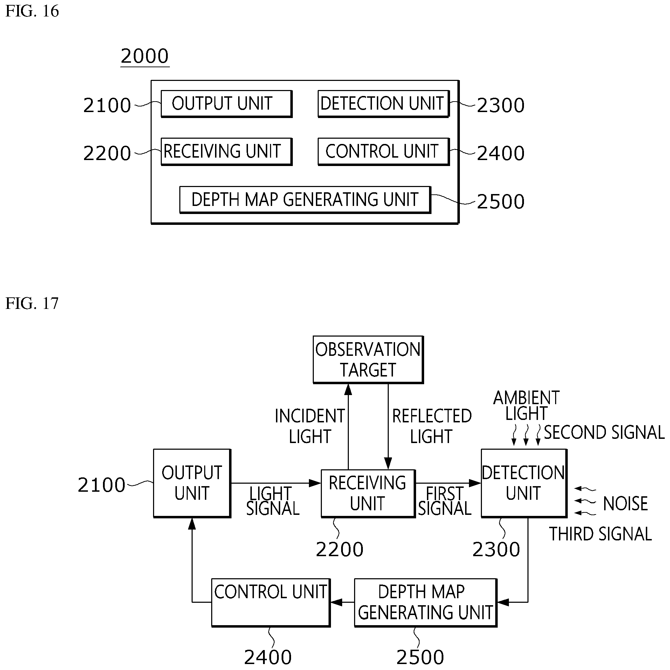

FIG. 16 is a configuration diagram of the LiDAR device according to the embodiment.

Referring to FIG. 16, a LiDAR device 2000 may include an output unit 2100, a receiving unit 2200, a detection unit 2300, a control unit 2400, and a depth map generating unit 2500. Only components related to the present embodiments are illustrated in the LiDAR device 2000 illustrated in FIG. 1. Accordingly, it is obvious to those skilled in the art that the LiDAR device 2000 may further include other general components in addition to the components illustrated in FIG. 16.

The LiDAR device 2000 according to the embodiment may use a point scanning method, and thus the intensity of light received by the detection unit 2300 may be smaller than that obtained by other methods, for example, a flash method. In addition, the LiDAR device 2000 may use not only the point scanning method, but also a line scanning method or the flash method. Accordingly, an avalanche photo diode (APD) or a single photon avalanche diode (SPAD) having high sensitivity may be adopted as the detection unit 2300. A specific circuit configuration such as the an analog front end (AFE), a time to digital converter (TDC), or the like may vary according to which light receiving element among the APD or the SPAD is included in the detection unit 2300.

FIG. 17 is a schematic conceptual diagram of an operating method of the LiDAR device according to the embodiment.

Referring to FIGS. 16 and 17, the LiDAR device according to the embodiment may include an output unit for outputting a light signal, a detection unit for detecting a first signal generated by the light signal reflected from an observation target and a second signal that is ambient light, a depth map generating unit for generating a depth map about the observation target based on the light signal and the first signal, and a control unit for comparing the intensity of the first signal with the intensity of the second signal and adjusting the intensity of the light signal.

The output unit 2100 may output the light signal and transmit the light signal to the receiving unit 2200.

The output unit 2100 may include a light source such as an edge light emitting laser, a vertical cavity surface emitting laser (VCSEL), a distributed feedback laser, an LED, a super luminescent diode (SLD), or the like. The output unit 2100 may generate and emit light in a plurality of different wavelength bands. The output unit 2100 may generate pulsed light or continuous light. The continuous light may be in the form of a sinusoid wave or a squared wave. By generating the output light signal in the form of pulsed light or continuous light, the LiDAR device 2000 may detect a time difference or phase difference between the output light signal output from the output unit 2100 and the input light signal input to the receiving unit 2200 after reflected from the object. In the present specification, the output light signal may be referred to as a light signal, and the object may be referred to as an observation target. From the perspective of the observation target, the output light signal may be incident light.

The output unit 2100 may include a light source, a lens group disposed on the light source, and a diffusion member disposed on the lens group. The light source generates and outputs light. The light generated by the light source may be infrared rays having a wavelength of 770 to 3000 nm. Alternatively, the light generated by the light source may be visible light having a wavelength of 380 to 770 nm. The light source may use an LED and have a form in which a plurality of light emitting diodes are arranged in a regular pattern. In addition, the light source may include an OLED or an LD. Alternatively, the light source may be a VCSEL. The VCSEL is one of LDs for converting an electric signal into a light signal and may output light having a wavelength of about 800 to 1000 nm, for example, the wavelength of about 850 nm or about 940 nm. The light source repeats blinking (on/off) at a predetermined time interval to generate an output light signal in the form of a pulse wave or a continuous wave. The predetermined time interval may be the frequency of the output light signal.

The lens group may collect light output from a light source and output the collected light to the outside. The lens group may be disposed to be spaced apart from the light source above the light source. Here, "above" of "above the light source" may refer to a side to which light is output from the light source. The lens group may include at least one lens. When the lens group includes a plurality of lenses, the lenses may be aligned based on a central axis to form an optical system. Here, the central axis may be the same as an optical axis of the optical system.

The diffusion member may receive the light output from the light source and the lens group, then refract or diffract the received light, and output the refracted or diffracted light.

The light signal output by the output unit 2100 may be adjusted by the control unit 2400. The output unit 2100 may output light signals having different intensities, cycles, and the like.

The receiving unit 2200 may receive reflected light reflected from the object. In this case, the received reflected light may be a light signal that is output by the output unit 100 and reflected from the object.

The receiving unit 2200 may include an image sensor, a filter disposed on the image sensor, and a lens group disposed on the filter. The light signal reflected from the object may pass through the lens group. The optical axis of the lens group may be aligned with the optical axis of the image sensor. The filter may be disposed between the lens group and the image sensor. The filter may be disposed on the optical path between the object and the image sensor. The filter may filter light having a predetermined wavelength range. Light in a specific wavelength band may pass the filter. Light having a specific wavelength may pass the filter. For example, light in an infrared band may pass the filter, and the filter may block light other than light in the infrared band. The image sensor may detect light. The image sensor may receive a light signal. The image sensor may detect the light signal and output the detected light signal as an electrical signal. The image sensor may detect light having a wavelength corresponding to the wavelength of light output by the light source. For example, the image sensor may detect light in an infrared band.

The image sensor may be formed to have a structure in which a plurality of pixels are arranged in the form of a grid. The image sensor may be a complementary metal oxide semiconductor (CMOS) image sensor or a charge coupled device (CCD) image sensor. In addition, the image sensor may include a ToF sensor for receiving IR light reflected from an object and measuring a distance using a time difference or phase difference.

The receiving unit 2200 may receive the light signal from the output unit 2100 and emit incident light toward the observation target. In addition, the receiving unit 2200 may receive reflected light generated by the incident light reflected from the observation target. In addition, the first signal which is the received reflected light may be transmitted to the detection unit 2300.

The detection unit 2300 may receive the first signal, which is the reflected light reflected from the observation target, from the receiving unit and detect the first signal. The detection unit 2300 may include a plurality of photodiodes, which may be light receiving elements that generate electric signals by light energy. The type of the light receiving element is not particularly limited.

The detection unit 2300 may receive and detect the first signal that is the reflected light, the second signal that is ambient light, and a third signal that is noise. The ambient light may include various types of light incident on the detection unit 2300 in addition to sunlight. The noise may include dark noise, thermal noise, and the like, which are the characteristics of the detection unit 2300. The intensity of the second signal may vary in real time because it is affected by sunlight or the like as ambient light. The greater the intensity of the second and third signals, the more difficult it may be to detect the first signal.

The detection unit 2300 may detect the first, second, and third signals and measure the intensity of the signals over time. Data on the measured signals may be stored in a memory inside the LiDAR device 2000 and transmitted to the control unit 2400.

The control unit 2400 controls driving of the output unit 2100, the receiving unit 2200, and the depth map generating unit 2500. The depth map generating unit 2500 and the control unit 2400 may be implemented in the form of a PCB. In addition, the depth map generating unit 2500 and the control unit 2400 may be implemented in the form of a different configuration. Alternatively, the control unit 2400 may be included in a terminal or a vehicle in which the LiDAR device 2000 according to the embodiment of the present invention is disposed. For example, the control unit 2400 may be implemented in the form of an AP of a smartphone provided with the LiDAR device 2000 according to the embodiment of the present invention or implemented in the form of an ECU of a vehicle provided with the LiDAR device 2000 according to the embodiment of the present invention.

The control unit 2400 may control the output unit 2100 to adjust the intensity, cycle, and the like of the light signal. The control unit 2400 may receive detection result data of the first, second, and third signals from the detection unit 2300 and transmit a command to adjust the intensity or cycle of the light signal according to the data result to the output unit 2100. For example, the control unit 2400 may increase the intensity of the light signal or shorten the output cycle of the light signal when the intensity of the second signal increases. In addition, the control unit 2400 may perform power supply control, on/off control, pulse wave or continuous wave generation control, and the like of the output unit 2100.

The depth map generating unit 2500 may generate the depth map of the observation target using the input light signal input to the receiving unit 2200. For example, the depth map generating unit 2500 may calculate the depth map of the observation target using a flight time required for the output light signal output from the output unit 2100 to be reflected from the object and then input to the receiving unit 2200. For example, the depth map generating unit 2500 may calculate a time difference between the output light signal and the reflected light signal using the electric signal received by the image sensor and calculate the distance between the observation target and the LiDAR device 2000 using the calculated time difference. For example, the depth map generating unit 2500 may calculate a phase difference between the output light signal and the reflected light signal using the electric signal received from the image sensor and calculate the distance between the observation target and the LiDAR device 2000 using the calculated phase difference.

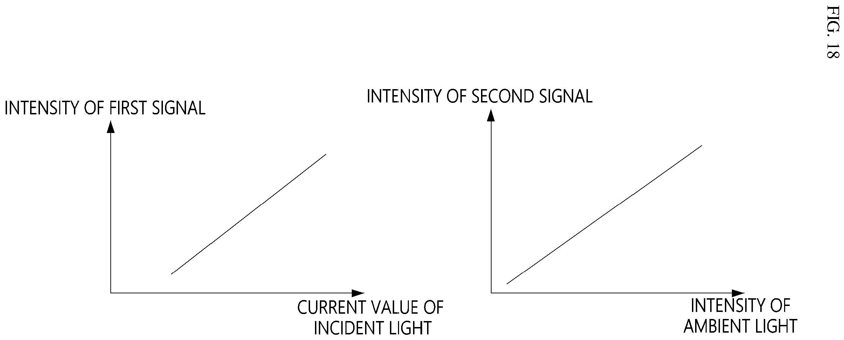

FIG. 18 is a graph illustrating the intensities of first and second signals according to an embodiment.

Referring to FIG. 18, the intensities of the first and second signals may vary.

The first signal may correspond to a signal according to reflected light that is light reflected from the observation target. Accordingly, the intensity of the first signal may vary according to the intensity of the incident light of the light signal output by the output unit. The intensity of the first signal may increase as a current value of the incident light increases.

The second signal may correspond to a signal according to ambient light. Accordingly, the intensity of the second signal may increase as the intensity of the ambient light such as sunlight increases. As the intensity of the second signal increases, it may become difficult for the detection unit to detect the first signal to be ultimately detected. Accordingly, when the intensity of the ambient light increases and the intensity of the second signal increases, a method of increasing the intensity of the first signal by increasing the current value of the incident light may be presented.

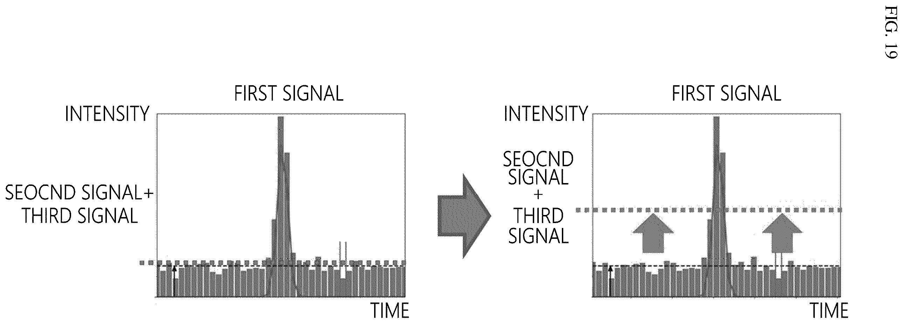

FIG. 19 shows histograms illustrating a case in which the intensity of the second signal is increased according to an embodiment.

The histogram of FIG. 19 is a bar graph illustrating the intensity of the signal detected by the detection unit over time.

Referring to FIG. 19, when the intensity of the second signal increases, the detection capability of the first signal may decrease.

Referring to FIG. 19, the detection unit of the LiDAR device according to the embodiment may detect the third signal that is noise.

The detection capability of the detection unit increases as a signal-to-noise ratio (SNR) increases. The SNR corresponds to the intensity (amplitude) of the first signal / (the intensity of the second signal + the intensity of the third signal). Ultimately, as the intensity of the ambient light or the noise signal increases, the SNR decreases, thereby lowering the detection capability of the first signal.

When the intensities of the second signal and the third signal are small, a difference is great from the intensity of the first signal, and thus the SNR is high, making it easy for the detection unit to detect the first signal. However, when the intensity of the second signal or the third signal increases, the difference is small from the intensity of the first signal, and thus the SNR is low, making it difficult for the detection unit to detect the first signal.

The third signal may be noise. The third signal may include thermal noise generated by the heat of the internal resistance of the detection unit and dark noise due to the characteristics of the detection unit. Accordingly, unlike the second signal, the third signal may not vary according to the ambient light and may be affected by the characteristics of the LiDAR device.

During the process of a LiDAR device module, the sum of the intensities of the second signal and the third signal may be measured according to the difference in the ambient light, and the measured data may be stored in the memory. The memory may be positioned inside the receiving unit or control unit of the LiDAR device. The LiDAR device module may measure the sum of the intensities of the second signal and the third signal and store the measured data in the memory. When all LiDAR device modules cannot collect data, an average value of the measured data for an appropriate number (N) of modules that may represent the characteristics of all modules may be used. A detection rate of the first signal may be adjusted by adjusting the intensity of the light signal according to the corresponding measured data.

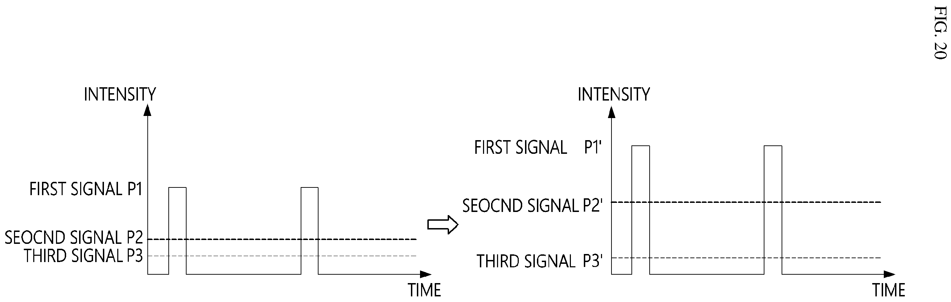

FIG. 20 is an image illustrating a change in signal when the intensity of a light signal is adjusted according to an embodiment.

Referring to FIG. 20, the control unit of the LiDAR device according to the embodiment may increase the intensity of the light signal when a ratio of the first signal to the sum of the second signal and the third signal decreases.

The left image of FIG. 20 is an image of a signal before the intensity of the second signal increases, and the right image is an image of a signal after the intensity of the second signal increases and the intensity of the light signal is adjusted to be large.

When the intensity of the first signal is P1, the intensity of the second signal is P2, and the intensity of the third signal is P3 before the intensity of the second signal increases, the SNR is P1/(P2+P3). In this case, when the intensity of the ambient light increases and P2 increases, the SNR decreases, making it difficult to detect the first signal.

When the intensity of the first signal is P1', the intensity of the second signal is P2', and the intensity of the third signal is P3', which are adjusted after the intensity of the second signal increases, the SNR is P1'/(P2'+P3'). When the intensity of the second signal detected by the detection unit increases, the control unit may transmit a command to increase the intensity of the light signal to the output unit. When the intensity of the light signal increases, the intensity of the incident light increases, and the intensity of the first signal also increases. Accordingly, even when P2' increases, a P1' value may be increased, thereby maintaining the SNR within a predetermined range.

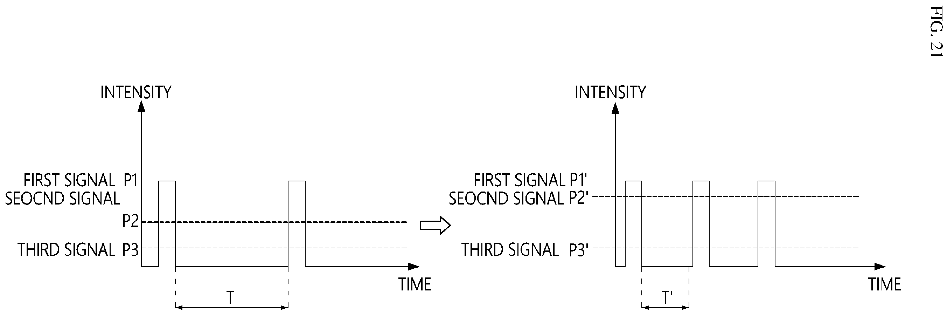

FIG. 21 is an image illustrating a change in signal when the cycle of the light signal is adjusted according to an embodiment.

Referring to FIG. 21, the control unit of the LiDAR device according to the embodiment may increase the cycle of the light signal when a ratio of the first signal to the sum of the second signal and the third signal decreases.

The left image of FIG. 21 is an image of a signal before the intensity of the second signal increases, and the right image is an image of a signal after the intensity of the second signal increases and the cycle of the light signal is adjusted to be small.

When the intensity of the first signal is P1, the intensity of the second signal is P2, and the intensity of the third signal is P3 before the intensity of the second signal increases, the SNR is P1/(P2+P3). In this case, when the intensity of the ambient light increases and P2 increases, the SNR decreases, making it difficult to detect the first signal. In addition, the cycle of the first signal before the intensity of the second signal increases is T. According to the cycle of the light signal output by the output unit, the output cycle of the incident light varies, and ultimately, the cycle of the first signal detected by the detection unit varies.

When the intensity of the first signal is P1', the intensity of the second signal is P2', and the intensity of the third signal is P3' after the intensity of the second signal increases, the SNR is P1'/(P2'+P3'). In addition, the cycle of the first signal, which is adjusted after the intensity of the second signal increases, is T'. In this case, since P2' increases more than P2, the SNR decreases. Accordingly, to facilitate the detection of the first signal, the detection unit may decrease the output cycle of the light signal to detect and secure data of many signals. As a result, since the detection cycle of the first signal decreases (T' is smaller than T), it is possible to secure more detection data of the first signal, thereby increasing the detection rate.

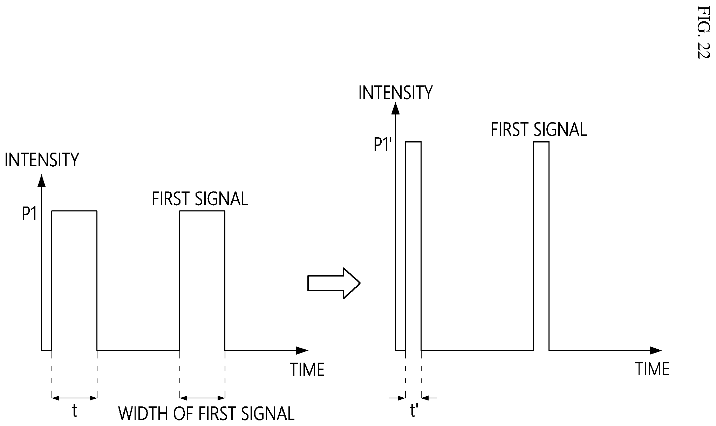

FIG. 22 is an image illustrating a change in signal when the width of the first signal is adjusted according to an embodiment.

Referring to FIG. 22, the control unit of the LiDAR device according to the embodiment may decrease or maintain a time width of the first signal when the intensity of the first signal increases.

Referring to FIG. 22, the control unit of the LiDAR device according to another embodiment may decrease the time width of the first signal when the intensity of the first signal has a maximum value.

Referring to FIG. 22, the control unit of the LiDAR device according to another embodiment may control the intensity of the first signal and the time width of the first signal so that the product of the intensity of the first signal and the time width of the first signal is a predetermined value.

The left image of FIG. 22 is an image of a signal before the intensity of the second signal increases, and the right image is an image of a signal after the intensity of the second signal increases and the output time width of the light signal is adjusted to be short.

The control unit may transmit a command to adjust the output time of the light signal to the output unit. When the output time of the light signal is adjusted, the output intensity and cycle of the light signal are constant, and the time for which the light signal is exposed to the observation target is adjusted. When the output time of the light signal is adjusted, time widths t and t' of the first signal detected by the detection unit vary. When the output time of the light signal is lengthened, the time width of the first signal is widened, and when the output time of the light signal is shortened, the time width of the first signal is narrowed.

When the time width of the first signal is narrowed while maintaining the intensity and cycle of the first signal, the detection effect is similar, but there is an advantage that the power consumption of the LiDAR device can be reduced.

When the intensity of the first signal is P1 before the intensity of the second signal increases and the increased intensity of the first signal after the intensity of the second signal increases is P1', the power consumption of the LiDAR device increases. In this case, the width of the first signal can be reduced from t to t' (t>t'), thereby reducing the power consumption of the LiDAR device.

When the intensity of the second signal increases too much and the output intensity of the light signal of the output unit is increased to the maximum value, the output time of the light signal can be reduced to reduce the power consumption, thereby further increasing the output intensity of the light signal. In this case, the control unit may control the size and width of the first signal so that the product of the intensity of the first signal and the time width of the first signal is present within a predetermined range. The product of the intensity and time width of the first signal is proportional to the power consumption of the LiDAR. For example, when the intensity of the first signal is 10 A and the time width is 5 ns before the intensity of the second signal increases and the output intensity of the light signal has a maximum value, the intensity of the first signal can be increased to 25 A by decreasing the time width of the first signal in which the intensity of the second signal increases to a range from 1 to 2 ns.

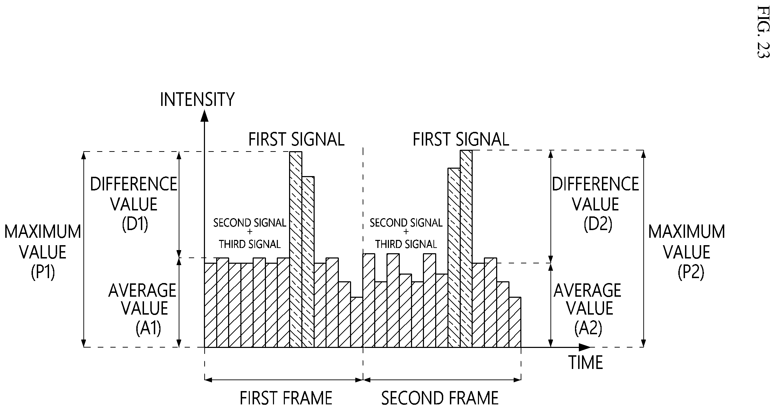

FIG. 23 is an image illustrating a first difference value and a second difference value in a first frame and a second frame according to an embodiment.

Referring to FIG. 23, the control unit of the LiDAR device according to the embodiment may compare the first difference value with the second difference value and adjust the cycle of the light signal. The first difference value may be a difference value between a maximum value of the first signal and an average value of the first signal, the second signal, and the third signal in a first frame, the second difference value may be a difference value between a maximum value of the first signal and an average value of the first signal, the second signal, and the third signal in the second frame, and a second frame may be a frame measured after the first frame.

The control unit may transmit a command to adjust the output cycle of the light signal of the output unit. In this case, the frame may be divided according to the detection cycle of the detected first signal. When the detection rate of the next frame is lower than that of the previous frame on the basis of a frame, the command to adjust the output cycle may be transmitted.

An output cycle including any detected first signal is set to the first frame. In addition, an output cycle including any first signal after the first frame is set to the second frame. For example, the second frame may correspond to the output cycle immediately following the first frame but is not limited thereto.

In this case, when the maximum value of the intensity of the first signal in the first frame is P1 and the average value of the intensities of the signals including the first signal, the second signal, and the third signal is A1, a difference value D1 (P1-A1) is calculated and referred to as a first difference value. Likewise, when the maximum value of the intensity of the first signal in the second frame is P2 and the average value of the intensities of the signals including the first signal, the second signal, and the third signal is A2, a difference value D2 (P2-A2) is calculated and referred to as a second difference value. In this case, the control unit may compare the first difference value with the second difference value and adjust the output cycle of the light signal. For example, when the first difference value is greater than the second difference value, the SNR is high, making it easy to detect the first signal, and thus the output cycle can be lengthened. In addition, when the first difference value is smaller than the second difference value, the SNR is low, making it difficult to detect the first signal, and thus the output cycle can be shortened.

The control unit of the LiDAR device according to the embodiment can reduce the cycle of the light signal in proportion to the difference between the first difference value and the second difference value when the second difference value is smaller than the first difference value.

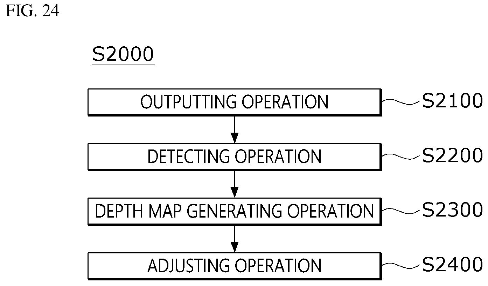

FIG. 24 is a flowchart of an operating method of a LiDAR device according to an embodiment.

Referring to FIG. 24, an operating method S2000 of a LiDAR device according to the embodiment may include operation S2100 of outputting, by an output unit, a light signal, operation S2200 of detecting, by a detection unit, a first signal generated by the light signal reflected from an observation target and a second signal that is ambient light, operation S2300 of generating, by a depth map generating unit, a depth map about the observation target based on the light signal and the first signal, and operation S2400 of comparing, by a control unit, the intensity of the first signal with the intensity of the second signal and adjusting the intensity of the light signal.

The operation of detecting the first signal and the second signal in the operating method of a LiDAR device according to the embodiment may include an operation of detecting a third signal that is noise, by the detection unit.

The operation of adjusting the intensity of the light signal in the operating method of a LiDAR device according to the embodiment may include an operation of increasing, by the control unit, the intensity of the light signal when a ratio of the first signal to the sum of the second signal and the first signal decreases.

The operation of adjusting the intensity of the light signal in the operating method of a LiDAR device according to the embodiment may include an operation of decreasing, by the control unit, the cycle of the light signal when a ratio of the first signal to the sum of the second signal and the third signal decreases within a predetermined range.

The operation of adjusting the intensity of the light signal in the operating method of a LiDAR device according to the embodiment may include an operation of decreasing or maintaining, by the control unit, a time width of the first signal when the intensity of the first signal increases.

The operation of adjusting the intensity of the light signal in the operating method of a LiDAR device according to the embodiment may include an operation of decreasing, by the control unit, the time width of the first signal when the intensity of the first signal has the maximum value.

The operation of adjusting the intensity of the light signal in the operating method of a LiDAR device according to the embodiment may include an operation of controlling, by the control unit, the intensity of the first signal and the time width of the first signal so that the product of the intensity of the first signal and the time width of the first signal is a predetermined value.

The operation of adjusting the intensity of the light signal in the operating method of a LiDAR device according to the embodiment may include an operation of comparing, by the control unit, the first difference value with the second difference value and adjusting the cycle of the light signal, in which the first difference value is a difference value between the maximum value of the intensity of the first signal and the average value of the intensities of the first signal, the second signal, and the third signal in the first frame, the second difference value is a difference value between the maximum value of the intensity of the first signal and the average value of the intensities of the first signal, the second signal, and the third signal in the second frame, and the second frame may be a frame measured after the first frame.

The operation of adjusting the intensity of the light signal in the operating method of a LiDAR device according to the embodiment may include an operation of decreasing, by the control unit, the cycle of the light signal in proportion to a difference between the first difference value and the second difference value when the second difference value is smaller than the first difference value.

The operation of adjusting the intensity of the light signal in the operating method of a LiDAR device according to the embodiment may include an operation of adjusting, by the control unit, the intensity of the light signal in response to a change in the second signal.

A LiDAR device according to an embodiment may include a light output device (VCSEL) for outputting a light signal, a plurality of lens groups for collecting the light signal and outputting the collected light signal to the outside, a light detection device (SPAD) for detecting a first signal generated by the light signal reflected from an observation target and a second signal that is ambient light, a depth map generating unit for generating a depth map about the observation target based on the light signal and the first signal, a control unit for comparing an intensity of the first signal with an intensity of the second signal and adjusting an intensity of the light signal, and a memory for storing data on an intensity of the first signal, which is adjusted according to a change in the intensity of the second signal.

Although the LiDAR device for extracting a depth map using a ToF method has been mainly described above, embodiments of the present invention are not limited thereto. The LiDAR device according to the embodiment of the present invention may be a LiDAR device for extracting a depth map using a structured light method. That is, the LiDAR device according to the embodiment of the present invention may use structured light having a predetermined pattern as an output light signal and generate a depth map using the disparity of the structured light.

According to one embodiment, the operating method according to various embodiments disclosed herein may be provided by being included in a computer program product. The computer program product may be traded as a product. The computer program product may be distributed in the form of a device-readable storage medium (e.g., compact disc read only memory (CD-ROM)) or distributed online (e.g., downloading or uploading) via an application store (e.g., Play Store^{™}) or directly between two user devices (e.g., smartphones). In the case of the online distribution, at least some of the computer program products (e.g., a downloadable app) may be at least temporarily stored or temporarily generated in a device-readable storage medium such as a memory of a server of a manufacturer, a server of an application store, or a relay server.

Specifically, the computer program product may be implemented by including a recording medium in which a program that performs the operating method according to the disclosed embodiment is stored.

Although embodiments have been described above in detail, the scope of the present disclosure is not limited thereto, and various modifications and improvements by those skilled in the art using the basic concept of the present disclosure defined in the appended claims are also included in the scope of the present disclosure.

The term "unit" used in the present embodiment means a software or hardware component such as a field programmable gate array (FPGA) or an application specific integrated circuit (ASIC), and the "unit" performs certain roles. However, the "unit" is not limited to software or hardware. The "unit" may be disposed in an addressable storage medium and configured to reproduce one or more processors. Accordingly, as an example, the "unit" includes components such as software components, object-oriented software components, class components, and task components, processes, functions, attributes, procedures, subroutines, segments of program code, drivers, firmware, microcode, circuits, data, database, data structures, tables, arrays, and variables. Functions provided in the components and "units" may be combined into the smaller number of components and "unit" or separated into additional components and "units." Additionally, the components and "units" may be implemented to reproduce one or more CPUs in a device or a security multimedia card.

Although embodiments have been mainly described above, these are only illustrative and do not limit the present invention, and those skilled in the art to which the present invention pertains can know that various modifications and applications that are not exemplified above are possible without departing from the essential characteristics of the embodiments. For example, each component specifically shown in the embodiments may be implemented by modification. In addition, differences related to these modifications and applications should be construed as being included in the scope of the present invention defined in the appended claims.

## Claims

1. A LiDAR device comprising:
a light emitting unit configured to generate an output light signal and emit the output light signal to a target area;
a light receiving unit configured to receive an input light signal that is input after reflected from the target area;
an information generating unit configured to generate information about the target area using the input light signal input to the light receiving unit; and
a control unit configured to control the light emitting unit, the light receiving unit, and the information generating unit,
wherein the light emitting unit has a preset field of view (FOV) in a first direction, and
the control unit controls a FOV in a second direction perpendicular to the first direction of the light emitting unit.

2. The LiDAR device of claim 1, wherein the light emitting unit has all preset FOVs in the second direction, and
the control unit controls the light emitting unit to scan only some of all the FOVs in the second direction based on the information about the target area.

3. The LiDAR device of claim 2, wherein the control unit extracts an effective area from the target area based on the information about the target area and reduces the FOV in the second direction of the light emitting unit so that the light emitting unit scans the effective area.

4. The LiDAR device of claim 3, further comprising a sensing unit including at least one of a gyro sensor and an acceleration sensor,
wherein the control unit controls the FOV in the second direction of the light emitting unit according to a sensing result of the sensing unit.

5. The LiDAR device of claim 4, wherein the control unit expands the reduced FOV in the second direction based on the information about the target area according to the sensing result of the sensing unit.

6. The LiDAR device of claim 1, wherein the light emitting unit sequentially scans a plurality of lines, which extend in the first direction, in the second direction, and
the first direction is a horizontal direction, and the second direction is a vertical direction.

7. The LiDAR device of claim 1, wherein the first direction is a vertical direction, and the second direction is a horizontal direction.

8. An information generation method of a LiDAR device, comprising:
generating, by a light emitting unit, an output light signal and emitting the output light signal to a target area;
receiving, by a light receiving unit, an input light signal that is input after reflected from the target area;
generating, by an information generating unit, information about the target area using the input light signal input to the light receiving unit; and
controlling, by a control unit, a field of view (FOV) in a second direction perpendicular to a first direction of the light emitting unit which has a preset FOV in the first direction.

9. The information generation method of claim 8, wherein the controlling of the FOV in the second direction further includes:
reducing the FOV in the second direction based on the information about the target area; and
expanding the reduced FOV in the second direction based on the information about the target area according to a sensing result of a sensing unit.

10. A LiDAR device comprising:
a light emitting unit configured to generate an output light signal and emit the output light signal to a target area;
a light receiving unit configured to receive an input light signal that is input after reflected from the target area;
an information generating unit configured to generate information about the target area using the input light signal input to the light receiving unit;
a control unit configured to control the light emitting unit, the light receiving unit, and the information generating unit; and
a sensing unit including at least one of a gyro sensor and an acceleration sensor,
wherein the light emitting unit includes a plurality of emitters disposed in an array form, and
the control unit extracts an effective area from the target area based on the information about the target area, drives only some of the plurality of emitters so that the light emitting unit scans only the effective area, and controls driving of the plurality of emitters according to a sensing result of the sensing unit.
